# FASCICULE DE BREVET EUROPEEN

(11) **EP 0 615 266 B1**
(45) Date de publication et mention de la délivrance du brevet: **09.10.1996**
(21) Numéro de dépôt: 94400293.0
(22) Date de dépôt: 10.02.1994
(51) Int. Cl.: H01H 37/00, H01H 71/14, H02H 6/00

(54) **Appareil de protection électrique à détecteur thermique**
Elektrische Schutzeinrichtung mit thermischen Detektor
Electric protection device with thermal detector

(30) Priorité: 22.02.1993 FR 9301980
(43) Date de publication de la demande: 14.09.1994
(73) Titulaire: SCHNEIDER ELECTRIC SA, F-92100 Boulogne-Billancourt (FR)
(72) Inventeur: Lubin, Isabelle, F-78570 Andresy (FR); Rundsztuk, Marek, F-95160 Montmorency (FR); Rey, Jean-François, F-78000 Versailles (FR); Tellier, François, F-95280 Jouy-Le-Moutier (FR); Stentz, Antoine, F-92500 Rueil-Malmaison (FR)
(74) Mandataire: Carias, Alain

(56) Documents cités:
- FR-A- 2 432 211
- FR-A- 2 439 405
- FR-A- 2 554 271
- FR-A- 2 641 410

## Description

La présente invention se rapporte à un appareil de protection électrique à détecteur thermique destiné à couper l'alimentation d'une charge polyphasée en cas de surcharge de courant sur au moins une phase ou de déséquilibre entre courants de phase.

Les relais thermiques mécaniques destinés à protéger des moteurs comprennent un bilame par phase et un ensemble de contacts séparables. Les bilames sont parcourus par tout ou partie des courants de phase et quand une surcharge intervient, le bilame d'une phase surchargée défléchit et agit mécaniquement sur un mécanisme de déclenchement, lequel provoque l'ouverture de l'ensemble de contacts.

Ces relais thermiques jouissent d'une grande robustesse et d'un faible prix de revient. Il est difficile d'utiliser ces relais thermiques à bilames pour des niveaux de courant allant de 100 à 200 ampères environ. En effet, de très nombreux échauffements parasites se produisent et l'échauffement des bilames n'est plus maîtrisé, le courant de déclenchement étant mal contrôlé.

Pour protéger des moteurs polyphasés, on utilise également des relais électroniques. Ces relais comportent pour chaque phase un organe détecteur tel qu'un transformateur d'intensité délivrant un signal image de l'intensité du courant, ainsi qu'un circuit électronique de traitement qui reçoit et traite les signaux fournis par les organes détecteurs pour délivrer un signal de déclenchement.

Dans un relais électronique tel que celui décrit par le brevet français 2.641.410, qui forme la base du préambule de la revendication 1, on utilise, afin de mémoriser de façon simple l'état thermique, un détecteur constitué par une résistance parcourue par le courant de phase et thermiquement couplée à un capteur au moyen d'un corps de couplage thermique.

L'invention a notamment pour but de fournir un appareil de protection électrique présentant un détecteur thermique capable de fournir de manière simple une valeur moyennée des surcharges appliquées aux phases d'une charge. Le détecteur thermique assure la fonction de mémoire thermique si l'appareil n'est pas alimenté ou s'il perd momentanément son alimentation. L'image thermique est présente quel que soit le niveau de courant.

L'appareil selon l'invention comprend un détecteur thermique ayant un élément résistif chauffant parcouru par un courant de phase et thermiquement couplé à un capteur de température au moyen d'un corps de couplage thermique et il est caractérisé par le fait que le détecteur thermique comporte une pluralité d'éléments résistifs thermiquement couplés au dit capteur de température.

Selon une caractéristique, les éléments résistifs sont sérigraphiés sur le corps de couplage thermique qui est en forme de plaque.

Selon une caractéristique, le détecteur comporte des moyens aptes à serrer élastiquement dans le boîtier, l'ensemble formé des éléments résistifs, du corps de couplage thermique et du capteur de température.

L'invention va maintenant être décrite avec plus de détail en se référant à des modes de réalisation donnés à titre d'exemple et représentés par les dessins annexés sur lesquels:
- la figure 1 est un schéma d'un appareil de protection électrique à détecteur thermique selon l'invention;
- la figure 2 est une perspective éclatée d'un premier mode de réalisation du détecteur thermique conforme à l'invention;
- la figure 3 est une vue en perspective, côté broches de connexion, du détecteur thermique de la figure 2;
- la figure 4 est une vue en perspective, coté capteur, du détecteur thermique des figures 2 et 3;
- la figure 5 une perspective éclatée d'un second mode de réalisation du détecteur thermique conforme à l'invention;
- la figure 6 est une vue en perspective, côté capteur, du détecteur thermique de la figure 5;
- la figure 7 est une vue en perspective et en coupe du détecteur thermique des figures 5 et 6;
- les figures 8 et 9 sont des vues en perspective d'une variante du détecteur thermique des figures 5 à 7.

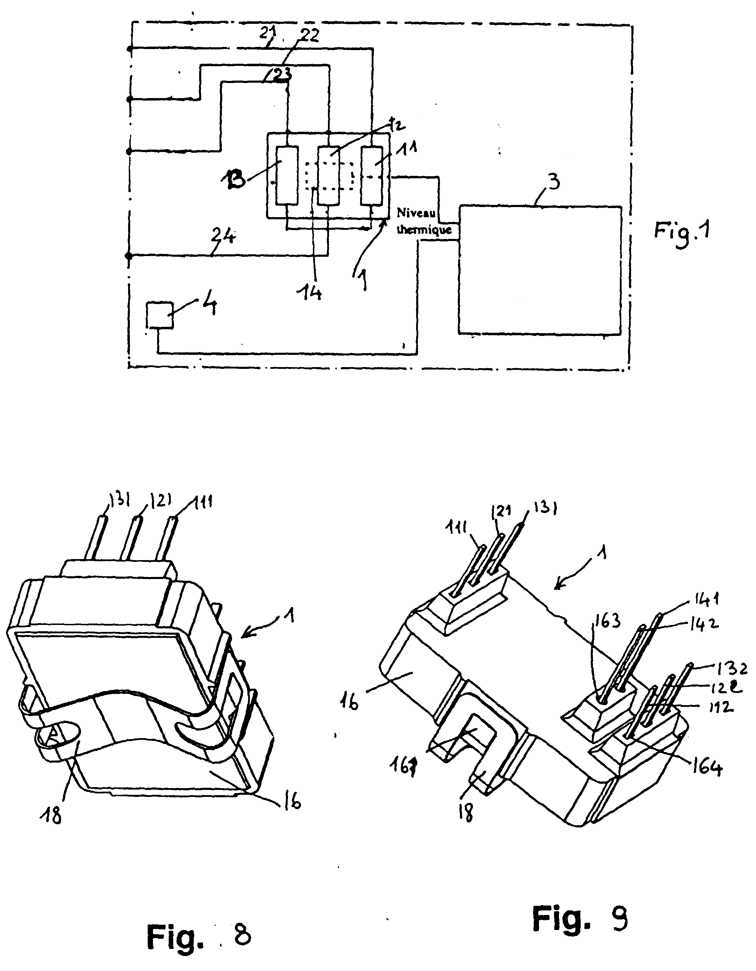

L'appareil électrique à détecteur thermique qui est schématisé à la figure 1 est destiné à couper l'alimentation d'un moteur polyphasé en cas de surcharge ou de déséquilibre entre les courants de phases. Par exemple cet appareil électrique est du type déclencheur de disjoncteur-moteur.

Le détecteur thermique 1 de l'appareil comprend des éléments résistifs chauffants 11, 12, 13 qui sont traversés chacun par un courant représentatif du courant de phase passant par un conducteur de phase. Les éléments résistifs 11, 12, 13 se terminent par des broches de connexion 111, 112, 121, 122, 131, 132 qui sont reliées à des conducteurs d'alimentation 21, 22, 23 qui sont couplés aux lignes de phase.

Les différents éléments résistifs 11, 12, 13 sont thermiquement couplés à un seul et même capteur de température 14 qui fournit un signal analogique à un circuit électronique de traitement 3 apte à traiter les signaux reçus et à délivrer un signal de déclenchement ou de commande.

L'appareil présente un capteur de compensation 4 destiné à fournir un signal analogique représentatif de la température ambiante au circuit électronique de traitement 3.

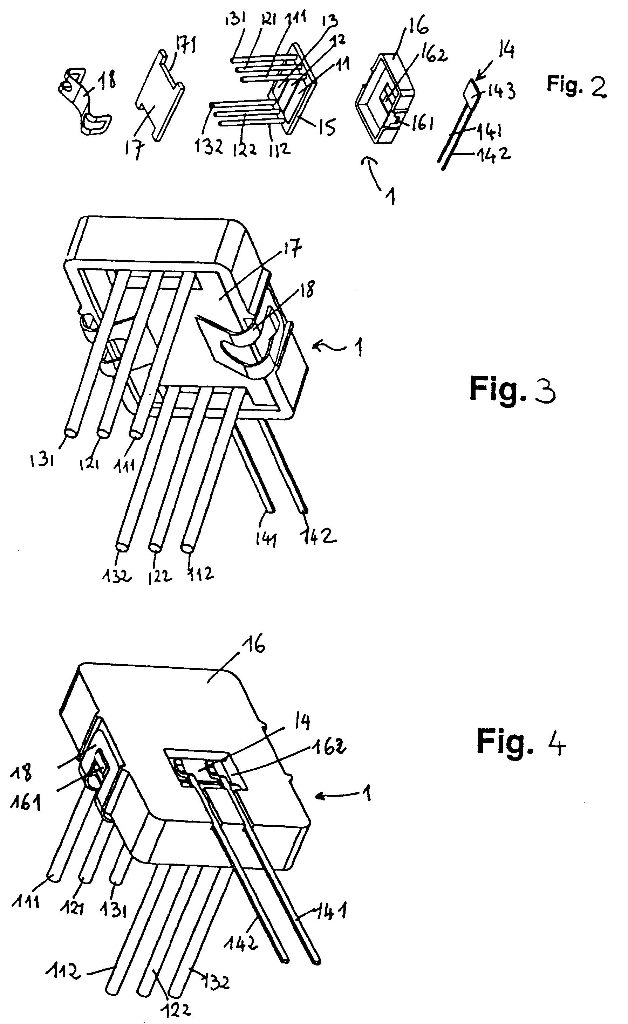

Le détecteur thermique 1 est représenté en détail sur les figures 2 à 9.

Les éléments chauffants 11, 12, 13 sont séparés du capteur 14 par une plaque de couplage thermique 15 réalisée en un matériau résistant à la température et isolant électriquement. De préférence, la plaque de couplage thermique 15 est en alumine.

Les éléments chauffants 11, 12, 13 sont associés à plusieurs phases d'une charge polyphasée telle qu'un moteur. Chaque élément chauffant 11, 12, 13 présente deux broches de connexion 111 et 112, 121 et 122, 131 et 132 respectivement. Ces broches de connexion sont sensiblement parallèles à la sortie du boîtier.

Chaque élément résistif chauffant 11, 12, 13 est sérigraphié sur le substrat que constitue la plaque de couplage thermique 15.

Le capteur de température 14 est un composant connu en soi du type thermistance. Il se présente sous la forme d'une plaquette mince 143 à laquelle sont raccordées des broches de connexion 141, 142. Ce capteur de température 14 est, par la plaquette 143, au contact direct de la plaque de couplage thermique 15. Il peut être sérigraphié sur la plaque de couplage 15 du côté opposé à la face sur laquelle sont sérigraphiés les éléments chauffants 11, 12, 13.

Les éléments résistifs 11, 12, 13 et leur plaque de couplage thermique 15 sont logés dans un boîtier constitué d'un corps 16 et d'une plaque de fermeture 17. Le boîtier 16 est réalisé en un matériau électriquement isolant, de préférence en matière plastique du type thermo-dur ou thermoplastique. La plaque de fermeture 17 est réalisée en matériau résistant à la chaleur, de préférence en mica.

Le détecteur thermique mémorise l'état thermique du moteur et fournit une image thermique de l'échauffement du moteur. En cas de coupure ou perte de l'alimentation, on conserve une image thermique de l'échauffement du moteur. Le détecteur thermique assure la fonction de mémoire thermique si le déclencheur n'est pas alimenté ou s'il perd momentanément son alimentation. Au redémarrage, on repartira d'un état tiède. L'appareil sur lequel est monté cet élément thermique est insensible aux harmoniques des courants de phase. Le détecteur thermique "calcule" physiquement la valeur efficace du courant de phase.

La plaque de fermeture 17 associée au boîtier 16 est soumise à un clip élastique 18 qui serre élastiquement, dans le boîtier, l'ensemble des composants à savoir les éléments résistifs et la plaque de couplage thermique 15 et le capteur de température 14 dans le but d'assurer un bon contact thermique entre les pièces. Le clip 18 s'accroche sur le boîtier 16 par des tenons 161.

Dans le mode réalisation des figures 2 à 4, les broches de connexion des éléments résistifs 11, 12, 13 s'étendent du coté de la face avant de la plaque 15, c'est à dire du côté de la face portant les éléments sérigraphiés et du côté opposé aux broches de connexion du capteur de température. Le capteur de température 14 est disposé du côté de la face arrière de la plaque 15. Les broches des éléments résistifs passent dans des encoches 171 de la plaque de fermeture 17. Les broches du capteur de température 14 passent par une fenêtre 162 ménagée dans le fond du corps de boîtier 16. Le capteur 14 est appliqué par sa plaquette 143 contre l'intérieur du fond du corps de boîtier.

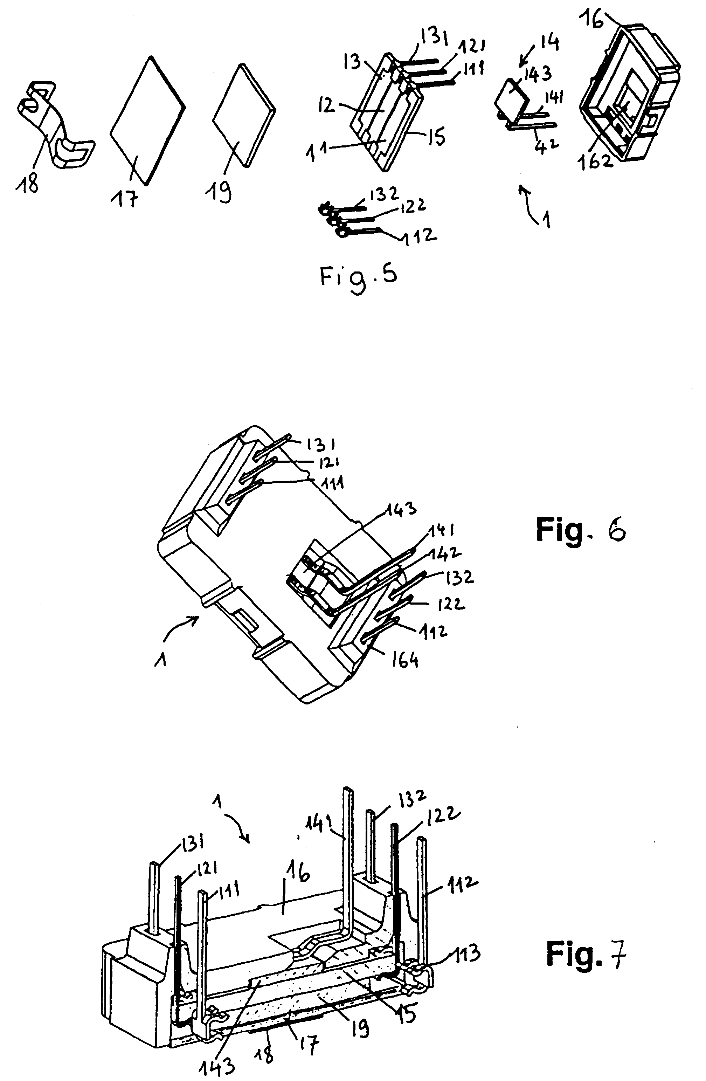

Dans les modes de réalisation des figures 5 à 7 ou 8 et 9, toutes les broches de connexion, tant celles des éléments résistifs que celle du capteur de température, sortent d'un même côté du boîtier. Les broches du capteur de température sortent entre les broches de connexion des éléments résistifs. Cette disposition est particulièrement adaptée au montage sur circuit imprimé.

Les broches de connexion des éléments résistifs 11, 12, 13 s'étendent du coté de la face arrière de la plaque 15, c'est à dire de la face opposée à celle portant les parties sérigraphiées. Le capteur de température 14 est également disposé du côté de la face arrière de la plaque 15, les broches du capteur de température 14 sortant du côté du fond du corps de boîtier 16. Une plaque de transfert 19 est insérée entre la plaque de fermeture 17 et la plaque de couplage thermique 15 pour éviter la casse par contrainte thermique de la plaque de couplage thermique 15. Les broches des éléments résistifs sortent du corps de boîtier 16, côté fond, par des trous 164 ménagés dans ledit corps de boîtier. Les broches 141 et 142 du capteur de température sont recourbées de manière à s'étendre parallèlement aux broches des éléments résistifs, entre celles-ci.

Dans les mode de réalisation des figures 2 à 4 et 5 à 7, les broches du capteur de température sortent par la fenêtre 162 ménagée dans le fond de boîtier.

Dans la variante des figures 8 et 9, les broches du capteur de température 14 sortent par des trous 163 ménagés dans le boîtier.

Dans le mode de réalisation de la figure 7, les broches des éléments résistifs 11, 12, 13 sont pourvues de pinces telles que 113 qui se fixent sur les bords de la plaque de couplage thermique 15 de manière à être reliées électriquement aux dits éléments résistifs.

Le fonctionnement de l'appareil va maintenant être expliqué.

Chaque élément résistif du détecteur thermique 1 reçoit un courant de phase ou un signal représentatif de ce courant. Lorsqu'une surcharge ou une surintensité se produit, l'échauffement d'un ou plusieurs élément(s) résistif(s) est décelé par le capteur de température 14 qui fournit un signal correspondant.

Le capteur de température donne l'image, en permanence, de l'échauffement thermique provoqué par les images des courants de phase.

Il est bien entendu que l'on peut, sans sortir du cadre de l'invention telle que revendiquée, imaginer des variantes et des perfectionnements de détail et de même envisager l'emploi de moyens équivalents. L'appareil électrique de protection pourrait être du type contacteur-disjoncteur ou du type relais thermique.

## Revendications

1. Appareil de protection électrique destiné à couper l'alimentation d'une charge polyphasée, comprenant un détecteur thermique (1) ayant un élément résistif chauffant (11, 12, 13) parcouru par un courant de phase et thermiquement couplé à un capteur de température (14) au moyen d'un corps de couplage thermique (15), caractérisé par le fait que ledit élément résistif (11, 12, 13) est sérigraphié sur le corps de couplage thermique (15) et est thermiquement couplé au dit capteur de température (14).

2. Appareil selon la revendication 1, caractérisé par le fait que l'élément résistif (11, 12, 13) présentent des broches de connexion (111, 112, 121, 122, 131, 132) sortant sensiblement parallèles du boîtier (16, 17).

3. Appareil selon l'une quelconque des revendications précédentes, caractérisé par le fait que les broches de connexion (111, 112, 121, 122, 131, 132) de l'élément résistif (11, 12, 13) sortent du coté opposé aux broches de connexion du capteur de température (14).

4. Appareil selon l'une quelconque des revendications précédentes, caractérisé par le fait que les broches de connexion (111, 112, 121, 122, 131, 132) de l'élément résistif (11, 12, 13) sortent du même côté que les broches de connexion ( 141, 142) du capteur de température (14).

5. Appareil selon l'une quelconque des revendications précédentes, caractérisé par le fait qu'il comporte des moyens (18) aptes à serrer élastiquement dans le boîtier, l'ensemble formé de l'élément résistif, du corps de couplage thermique (15) et du capteur de température (14).

6. Appareil selon l'une quelconque des revendications précédentes, caractérisé par le fait que le boîtier est formé d'une partie en matière plastique (16) et d'une plaque de fermeture (17) réalisée en matériau résistant à la chaleur et soumise à des moyens élastiques (18).

7. Appareil selon l'une quelconque des revendications précédentes, caractérisé par le fait que les broches de connexion de l'élément résistif se fixent sur les bords de la plaque de couplage thermique (15).

8. Appareil selon l'une quelconque des revendications précédentes, caractérisé par le fait que l'élément résistif (11, 12, 13) est alimenté via des transformateurs d'intensités et des dispositifs de redressement et qu'un capteur de température (14) est relié au circuit électronique de traitement (3).

9. Appareil selon l'une quelconque des revendications précédentes, caractérisé par le fait que le capteur de température (14) est sérigraphié sur la plaque de couplage (15).

## Patentansprüche

1. Elektrische Schutzeindchtung für die Versorgungsunterbrechung einer Mehrphasenlast, bestehend aus einem thermischen Detektor (1), mit einem mit Phasentrom durchströmten heizenden Widerstandselement (11, 12, 13), das über einen thermischen Schaltkörper (15) mit einem Temperaturfühler (14) gekoppelt ist, dadurch gekennzeichnet, dass das genannte Widerstandselement (11, 12, 13) auf dem thermischen Schaltkörper (15) siebgedruckt ist, und mit dem genannten Temperaturfühler thermisch gekoppelt ist.

2. Einrichtung gemäss Anspruch 1, dadurch gekennzeichnet, dass das Widerstandselement (11, 12, 13) aus dem Gehäuse (16, 17) parallel herauskommende Anschlupstifte (111, 112, 121, 122, 131, 132) erweist.

3. Einrichtung nach einem der vorstehenden Ansprüche, dadurch gekennzeichnet dass die Anschlupstifte (111, 112, 121, 122, 131, 132) des widerstandselements (11, 12, 13) aus der den Anschlußstiften des Temperaturfühlers gegenüberstehenden Seite herauskommen.

4. Einrichtung nach einem der vorstehenden Ansprüche, dadurch gekennzeichnet, dass die Anschlupstifte (111, 112, 121, 122, 131, 132) des widerstandselements (11, 12, 13) aus der gleichen Seite als die Anschlußstifte (141, 142) des Temperaturfühlers (14) herauskommen.

5. Einrichtung nach einem der vorstehenden Ansprüche, dadurch gekennzeichnet, dass sie mit Mittel (18) versehen ist, die in der Lage sind, die aus dem Widerstandselement, aus dem thermischen Schaltkörper (15) und aus dem Temperaturfühler (14) bestehende Einheit elastisch in das Gehäuse einzuklemmen.

6. Einrichtung nach einem der vorstehenden Ansprüche, dadurch gekennzeichnet, dass das Gehäuse aus einem Kunststoffteil (16) und aus einer mit elastischen Mitteln (18) beanspruchten Verschlussplatte (17) aus wärmebeständigem Material besteht.

7. Einrichtung nach einem der vorstehenden Ansprüche, dadurch gekennzeichnet, dass die Anschlupstifte des Widerstandselements auf den Rändem der thermischen Schaltplatte (15) befestigt sind.

8. Einrichtung nach einem der vorstehenden Ansprüche, dadurch gekennzeichnet, dass das Widerstandselement (11, 12, 13) über Stromwandler und Gieichrichtungvorrichtungen versorgt wird, und dass ein Temperaturfühler (14) mit dem elektronischen Verarbeitungskreis (3) verbunden ist.

9. Einrichtung nach einem der vorstehenden Ansprüche, dadurch gekennzeichnet, dass der Temperaturfühler (14) auf der Schaltplatte (15) siebgedruckt ist.

## Claims

1. Electrical protection device adapted to cut off the supply of power to a multiphase load and comprising a thermal detector having a heater resistive element carrying a phase current and thermally coupled to a temperature sensor by means of a thermal coupling body, said thermal detector comprising a plurality of resistive elements silkscreened onto said thermal coupling body and thermally coupled to said temperature sensor.

2. Device according to claim 1 wherein said resistive elements have substantially parallel connecting pins exiting a casing.

3. Device according to claim 1 wherein connecting pins of said resistive elements exit the device on the side opposite connecting pins of said temperature sensor.

4. Device according to claim 1 wherein connecting pins of said resistive elements exit the device on the same side as connecting pins of said temperature sensor.

5. Device according to claim 1 further comprising means for elastically clamping into a casing said resistive elements, said thermal coupling body and said temperature sensor.

6. Device according to claim 1 comprising a casing having one part made from a plastics material and a closure plate made from a heat resistant material and spring means operative on said closure plate.

7. Device according to claim 1 wherein connecting pins of said resistive elements are fixed to the edges of said thermal coupling plate.

8. Device according to claim 1 wherein said resistive elements are adapted to be fed with current by current transformers and rectifier devices and said temperature sensor is connected to an electronic processor circuit.

9. Device according to claim 1 wherein said temperature sensor is silkscreened onto said coupling body.
